# EUROPEAN PATENT APPLICATION

(11) **EP 0 564 105 A2**
(43) Date of publication of application: **06.10.1993**
(21) Application number: 93301752.7
(22) Date of filing: 08.03.1993
(51) Int. Cl.: G07F 7/10, G06K 19/073

(54) **Memory module adapter**

(30) Priority: 19.03.1992 FI 921187
(71) Applicant: NOKIA MOBILE PHONES LTD., SF-24101 Salo (FI)
(72) Inventor: Pelkonen, Sakari, SF-90240 Oulu (FI)
(74) Representative: Frain, Timothy John

(57) **Abstract**

A memory module adapter comprising a circuit board having contacts the size and configuration of which is compatible with a reader for a first memory module such as a credit card sized Subscriber Identity Module (SIM) card. The adapter also comprises distinct from the contacts a memory module reader for a second memory module, such as a plug in Subscriber Identity Module (SIM) card.

## Description

This invention relates to a memory module adapter.

It is known in the field of cellular radio telephones, for example, to use a memory module such as a data card which may be removably inserted into the telephone. Data, such as identity information, is read from the inserted card and used in the subsequent operation of the telephone. By way of example European Patent Application EP-A-0,369,110 discloses a mobile radio telephone having a handset into which a data card storing subscriber-related information is insertable for transferring information from the data card to the working memory of the telephone.

The data card may be, for example, a so-called "smart-card" which is similar in size to a conventional plastic credit card and which includes a memory implemented as an integrated circuit device, commonly referred to as a "chip", in which information is stored. For this reason such cards are also often known as "chip cards".

In addition to subscriber identity information, such as the subscriber telephone number, and personal identification number (PIN), the smart card may store for example, call charge information (i.e. a charge meter), a telephone number index, or false PIN entries. As memory capacity expands in smaller chip sizes, more applications can be implemented on one smart card. Accordingly, it is envisaged that in future multipurpose smart cards will cover an even wider range of applications than personal identification and data storage services.

Indeed, in modern telecommunications systems, the applications for smart cards is expanding. One such application in this field is the so-called subscriber identity module (SIM) proposed for the pan-European digital cellular radio telephone system known as GSM (Group Spéciale Mobile). For more information about the SIM proposed for GSM, reference is invited to the European Telecommunications Standards Institute (ETSI) Recommendation GSM 11.11 which describes the technical SIM specifications and Recommendation GSM 02.17 for the functional characteristics of the SIM.

There are currently two different mechanical standards proposed for the GSM SIM card and it is probable that a third will evolve. The functionality of the SIM card is the same for all sizes, it is essentially that the physical dimensions are different. At present the two standards are (a) a credit card size SIM card, known here as an IC SIM and (b) a smaller SIM card normally of about 20mm x 25mm known here as a plug-in SIM . The proposed third standard is likely to be a mid-sized SIM card about half the size of a regular credit card. The rationale behind the different sizes is that the credit card size is perceived as a convenient size for the user from a practical standpoint. However, the credit card size is relatively large, and smaller card sizes are needed as miniaturization continues to drive down the overall size of the terminal (i.e. the radio telephone unit itself). The plug-in SIM card is normally intended to be semi-permanently installed in the cellular telephone.

In future it is envisaged that compatibility problems are likely to arise when several different sizes of SIM card are in wide use, because the SIM card receiving device in a particular terminal will generally be designed to accept only one SIM card type.

As used in the present context, the term "memory module" includes a data card (such as a smart card (IC card) or a magnetic card), and other forms of package enclosing or carrying a memory device. The data card may be a passive memory card, i.e. essentially a read only memory (ROM), or an active processor card, i.e. capable of processing information internally within the card.

According to the present invention there is provided a memory module adapter comprising a substrate having the configuration of a memory module of a first type; contacts provided on the substrate for enabling electrical connection to a card reader adapted to receive a memory module of the first; type means, provided on the substrate, for receiving a memory module of a second type; and means for electrically coupling the means for receiving the memory module of a second type to the electrical contacts on the substrate such that when a memory module of a second type is present in the receiving means information may be transferred between the memory module of a second type and the card reader.

An advantage of the invention is the provision of a memory module adapter which enables the use of any size of plug-in SIM card in a device, such as a telephone, having a memory module reader designed to receive a IC SIM card.

By means of the device the user of a Plug-in SIM card can use the SIM card, for example, in a telephone which does not have a reader for a Plug-in SIM card. A traveller who takes a Plug-in SIM card along in order to use it, for example, in a rented car, will need an adapter such as this, since not many telephone manufacturers have readers for a Plug-in SIM card.

GSM is the first system in which it is possible to use both Plug-in SIM and IC SIM cards. The term plug-in SIM card is intended to cover any SIM card of smaller dimensions than the standard IC SIM card.

In one embodiment of the invention the Plug-in SIM card reader comprises a chassis on which the contacts are located and which is fastened to a circuit board, in which the reader can be closed with a cover so that a Plug-in SIM card will remain in place during use.

In another embodiment of the invention the Plug-in SIM card reader comprises a slot in a circuit board, into which slot a Plug-in SIM card can be inserted for use.

Both of the embodiments described above are of simple construction.

An embodiment of the invention is described below, by way of example, with reference to the accompanying drawings, in which:
Figure 1 depicts a memory module adapter in accordance with the invention;
Figure 2 depicts the adapter of Figure 1, as seen from above, with a cover in an open position; and
Figure 3 depicts the adapter of Figure 1 with the cover in the closed position.

The memory module adapter comprises a circuit board 1 having contacts 2 which are compatible in size and configuration with the IC SIM card reader of a telephone.

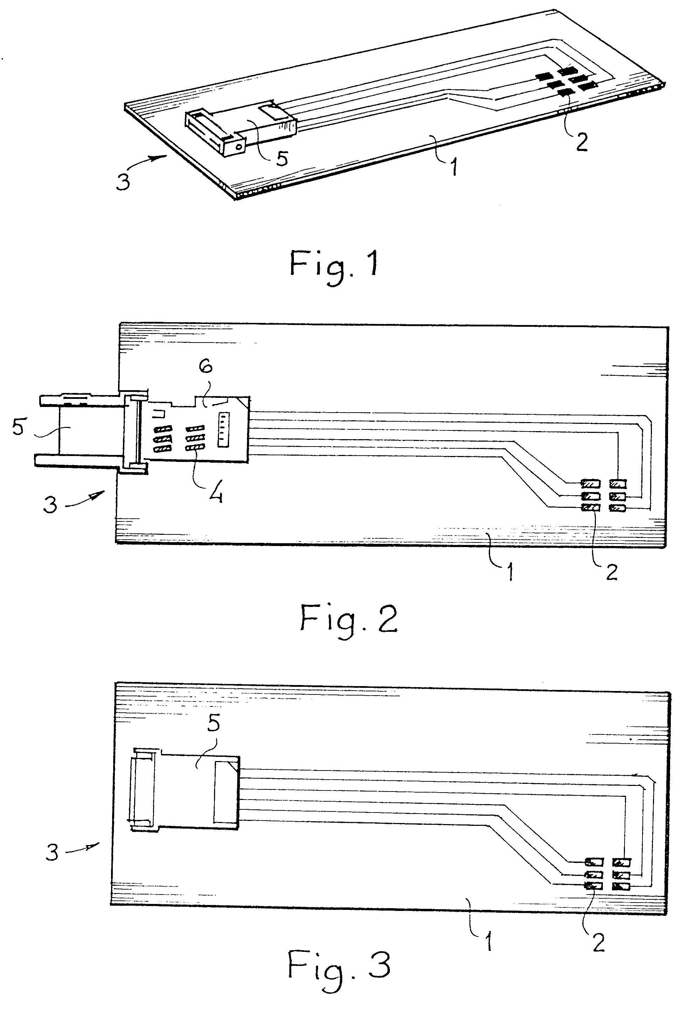

At one end of the circuit board 1 there is provided a reader drive 3 for a Plug-in SIM card. The Plug-in SIM card reader drive 3 comprises a chassis plate 6 on which contacts 4 are located. The reader drive 3 can be closed with a cover 5 so that a Plug in SIM card will remain in place during use. A Plug in SIM card is inserted into the cover 5 in an open position, as shown in Figure 2, whereafter the cover is rotated into the closed position, as shown in Figure 3, whereupon the Plug-in SIM card will settle on the contacts 4. The entire circuit board 1 will now serve as an adapter and can be inserted into the desired telephone such as a GSM radio telephone.

It will be clear to a person skilled in the art that modifications may be incorporated without departing from the scope of the present invention. For example the adapter is not restricted to the example depicted above; the Plug in SIM card reader may comprise a slot in a circuit board, into which slot a Plug in SIM card can be inserted directly for use and from which it can be withdrawn after use. Also the plug in SIM card, reader may be configured to receive any one of a number of different sized plug in SIM card.

## Claims

1. A memory module adapter comprising;
a substrate having the configuration of a memory module of a first type;
contacts provided on the substrate for enabling electrical connection to a card reader adapted to receive a memory module of the first type;
means, provided on the substrate, for receiving a memory module of a second type; and
means for electrically coupling the means for receiving the memory module of a second type to the electrical contacts on the substrate such that when a memory module of a second type is present in the receiving means information may be transferred between the memory module of a second type and the card reader.

2. A memory module adapter as claimed in claim 1, wherein the substrate is substantially credit card sized.

3. A memory module adapter as claimed in claim 1 or claim 2, wherein the memory module of a second type comprises a plug in Subscriber Identity Module (SIM) card.

4. A memory module adapter as claimed in claim 3, wherein the plug in SIM card is approximately 25 mm in length and 20mm in breadth.

5. A memory module adapter as claimed in any preceding claim, wherein the means, provided on the substrate, for receiving a memory module of a second type comprises electrical contacts disposed on a substrate.

6. A memory module adapter as claimed in claim 5, wherein the means for receiving a memory module of a second type comprises a cover which is movable between a first position in which a memory module may be inserted into the cover and a second position where the cover extends above the contacts such that the memory means abuts the contacts.

7. A memory module adapter as claimed in claim 5, wherein the means for receiving a memory module of a second type comprises a slot in the substrate, into which slot a memory modual of a second type can be inserted so as to abut the contacts.
